# FASCICULE DE BREVET EUROPEEN

(11) **EP 1 303 354 B1**
(45) Date de publication et mention de la délivrance du brevet: **04.06.2008**
(21) Numéro de dépôt: 01954109.3
(22) Date de dépôt: 16.07.2001
(51) Int. Cl.: B01L 3/16, B01D 3/02

(54) **DISPOSITIF D'EVAPORATION ET DE CONDENSATION EN MILIEU FERME**
VORRICHTUNG ZUR VERDAMPFUNG UND KONDENSATION IN EINEM GESCHLOSSENEM BEHÄLTER
DEVICE FOR EVAPORATION AND CONDENSATION IN CONFINED ENVIRONMENT

(30) Priorité: 17.07.2000 FR 0009322; 21.12.2000 US 256919 P
(43) Date de publication de la demande: 23.04.2003
(73) Titulaire: Analab (Société à Responsabilité Limitée), 67800 Hoenheim (FR)
(72) Inventeur: MANHES, Gérard, F-92310 Sevres (FR); GOPEL, Christa, F-75011 Paris (FR)
(74) Mandataire: Nuss, Pierre
(86) Numéro de dépôt international: PCT/FR2001/002308
(87) Numéro de publication internationale: WO 2002/005961

(56) Documents cités:
- US-A- 4 617 093
- US-A- 4 846 935
- US-A- 5 142 873

## Description

La présente invention concerne le domaine des appareils de laboratoire, notamment ceux servant à la préparation des échantillons destinés à une analyse chimique et en particulier celui des évaporateurs-condenseurs. Elle a pour objet un dispositif d'évaporation et de condensation en milieu fermé.

Lors d'une caractérisation chimique qualitative et/ou quantitative, en particulier de corps solides, il est presque toujours nécessaire de préparer les échantillons avant d'effectuer l'analyse proprement dite qui permet d'en déterminer la composition.

Un procédé de préparation classique en chimie est connu sous le nom de « voie humide » et consiste à mettre en solution les substances organiques ou minérales à examiner à l'aide de solvants ou de réactifs adaptés afin de « libérer » les espèces pouvant être relevées et mesurées dans les appareils de mesures physico-chimiques ou isotopiques habituellement employés (HPLC, RMN, spectrophotométrie IR, absorption atomique...).

Pour des composés inorganiques solides, on utilise généralement des réactifs minéraux particulièrement concentrés et agressifs, tels que des acides forts ou mélanges d'acides forts, des bases ou mélanges de bases fortes qui, de surcroît, doivent parfois être chauffés.

En ce qui concerne les solvants habituellement utilisés pour dissoudre les composés organiques, ceux-ci sont souvent nocifs, voire toxiques pour l'homme et son environnement.

Le résultat final de la dissolution de l'échantillon (et des éventuelles étapes chimiques subséquentes telles que neutralisation, filtration, précipitation, substitution de solvant...) est donc une solution liquide d'un volume plus ou moins important qu'il est nécessaire de réduire afin de concentrer les substances « libérées » à analyser. Dans certains cas, il peut même être nécessaire d'éliminer complètement le ou les liquides ayant servi à la préparation de l'échantillon pour obtenir ce que l'on appelle un résidu sec.

Cette opération de concentration est traditionnellement réalisée en chauffant ladite solution dans un récipient adapté et en évaporant les liquides ou solvants sous une hotte d'extraction et/ou à l'aide d'évaporateurs. Des évaporateurs connus sont, par exemple, des évaporateurs alimentés par un flux gazeux spécifique ou des évaporateurs rotatifs qui permettent de récupérer et de recycler une partie au moins des solvants et réactifs évaporés.

Les évaporations en milieu dit « ouvert » posent cependant beaucoup de problèmes en matière de sécurité et de respect de l'environnement. En effet, les vapeurs des solvants ou des réactifs chimiques contenus dans les solutions à concentrer sont généralement nocives pour la santé du manipulateur, pour l'appareillage (conduites, filtres...), voire dangereuses (risque d'incendie ou d'explosion). Des normes environnementales de plus en plus strictes impliquent en outre la mise en place de dispositifs de neutralisation et de filtration complexes de l'air chargé en solvants qui est aspiré par les hottes et/ou des gaz chargés sortant des évaporateurs à flux gazeux avant leur rejet dans l'atmosphère.

De plus, l'air ou les gaz arrivant dans la hotte ou les évaporateurs à flux gazeux risquent de polluer l'échantillon à analyser, ce qui peut conduire à des mesures ultérieures erronées, en particulier lorsqu'il s'agit de détecter des éléments présents à l'état de traces. Dans certains cas il peut ainsi être nécessaire de veiller à ce que l'air ou les gaz entrants soient adaptés à la nature de la solution à traiter et/ou particulièrement purs, ce qui n'est ni pratique, ni économique.

Bien que les évaporateurs alimentés par un flux gaz spécifique évitent la dissémination des réactifs évaporés dans la hotte d'extraction, leur utilisation demeure contraignante dans la mesure où elle implique la manipulation des échantillons en série.

Les évaporateurs rotatifs présentent également bon nombre d'inconvénients. Relativement sophistiqués, ils sont de petites tailles, difficiles à entretenir, fragiles à manipuler et, du fait de leur complexité, relativement onéreux. De surcroît, ils ne sont pas adaptés à l'évaporation de certains réactifs inorganiques particulièrement corrosifs tels que l'acide fluorhydrique, par exemple.

La présente invention a notamment pour but de pallier ces inconvénients.

A cet effet, elle a pour objet un dispositif d'évaporation et de condensation en milieu fermé constitué essentiellement d'un récipient d'évaporation, d'un moyen de chauffage dudit récipient d'évaporation et d'un récipient de condensation relié de façon sensiblement étanche audit récipient d'évaporation, caractérisé en ce que lesdits récipients d'évaporation et de condensation sont reliés entre eux, au niveau de leurs ouvertures, en s'étendant de part et d'autre d'un plan commun de séparation, de manière à ce que la disposition desdits récipients forme sensiblement un « V » renversé à sommet vif et en ce que sensiblement toute la surface de la paroi formant le récipient d'évaporation est portée, par ledit moyen de chauffage, à une même température T₁ supérieure à la température T₂ la plus élevée de la paroi formant le récipient de condensation.

L'invention sera mieux comprise grâce à la description ci-après qui se rapporte à des modes de réalisation préférés, donnés à titre d'exemples non limitatifs, et expliqués avec référence aux dessins schématiques annexés, dans lesquels :
la figure 1 représente, de manière schématique, une vue en coupe d'un premier exemple de réalisation du dispositif selon la présente invention ;
la figure 2 représente, de manière schématique, une vue en coupe d'un second exemple de réalisation du dispositif selon la présente invention ;
la figure 3 représente, de manière schématique, une vue en perspective du dispositif selon la figure 2, et ;
les figures 4a à 4d représentent des schémas simplifiés du fonctionnement du dispositif selon la présente invention ;

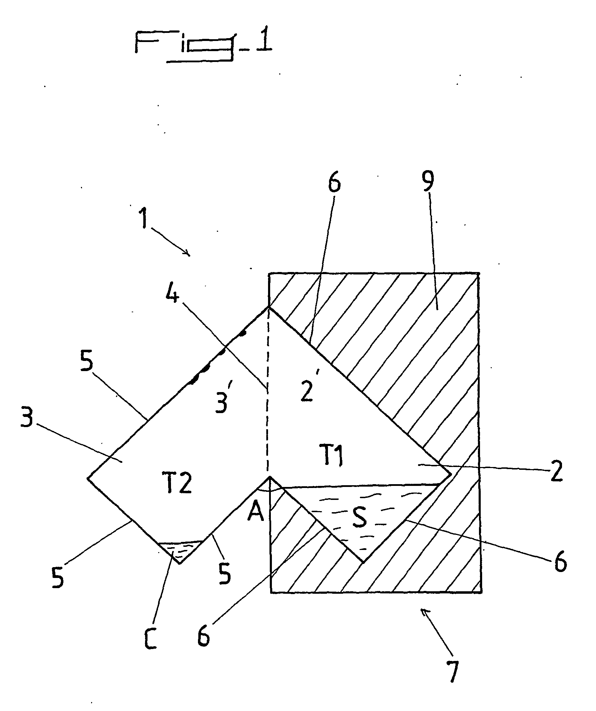

Conformément à l'invention, et comme on le voit sur la figure 1, le dispositif 1 d'évaporation et de condensation en milieu fermé est constitué essentiellement d'un récipient d'évaporation 2, d'un moyen de chauffage 7 dudit récipient d'évaporation 2 et d'un récipient de condensation 3 relié de façon sensiblement étanche audit récipient d'évaporation 2.

Selon un premier mode de réalisation représenté en coupe sur la figure 1, le dispositif 1 conforme à la présente invention est caractérisé en ce que lesdits récipients d'évaporation 2 et de condensation 3 sont reliés entre eux, au niveau de leurs ouvertures 2', 3', en s'étendant de part et d'autre d'un plan commun de séparation 4 de manière à ce que la disposition desdits récipients 2, 3 forme sensiblement un « V » renversé à sommet vif et en ce que sensiblement toute la surface de la paroi 6 formant le récipient d'évaporation 2 est portée, par ledit moyen de chauffage 7, à une même température T₁ supérieure à la température T₂ la plus élevée de la paroi 5 formant le récipient de condensation 3.

Les matériaux constituant le récipient d'évaporation 2 et le récipient de condensation 3 et/ou la réalisation de la liaison entre lesdits récipients 2, 3 sont choisis de manière à résister aux réactifs et solvants utilisés pour traiter l'échantillon à analyser.

La solution S à concentrer est à verser dans le récipient d'évaporation 2 alors que le récipient de condensation 3 est prévu pour recueillir le condensat C qui s'y accumule au fur et à mesure que la solution S est évaporée. Le dispositif 1 permet ainsi de condenser les réactifs ou les solvants juste après leur évaporation.

Complètement isolé du milieu extérieur, le dispositif 1 selon l'invention ne fait pas appel à un balayage par un flux gazeux sur la solution S à concentrer afin d'évacuer les vapeurs émises lors de l'évaporation de ladite solution S contenant les substances à analyser.

Il permet ainsi de réaliser toutes les opérations courantes d'évaporation et de condensation de façon économique et en toute sécurité. Le dispositif 1 selon l'invention permet notamment d'éviter l'émission, dans l'air ambiant du laboratoire puis dans l'atmosphère, de substances nuisibles à la santé du manipulateur, aux installations techniques et à l'environnement.

La condensation des réactifs de solubilisation évaporés sous la forme de condensats C dans le récipient de condensation 3 permet de récupérer ces derniers sous une forme concentrée en vue de leur stockage ou de leur traitement avant élimination ou recyclage.

Le dispositif 1 selon l'invention permet de travailler, si nécessaire, sous des hottes d'extraction fonctionnant à faible débit d'air et ne nécessite pas ou peu de mesures de traitement du flux d'air évacué par lesdites hottes. Il permet donc une économie dans la construction des laboratoires et dans leur coût de fonctionnement. Il permet également de réduire la consommation d'énergie des hottes existantes qui n'ont plus besoin de fonctionner constamment à plein régime lors de telles manipulations.

En outre, le dispositif 1 selon l'invention supprime l'éventuelle contamination des échantillons par l'air ou le flux gazeux balayant la surface desdits échantillons en cours d'évaporation.

Le dispositif 1 est aussi plus simple d'emploi que les évaporateur existants et plus flexible dans la mesure où il permet de traiter les échantillons à concentrer de manière individuelle.

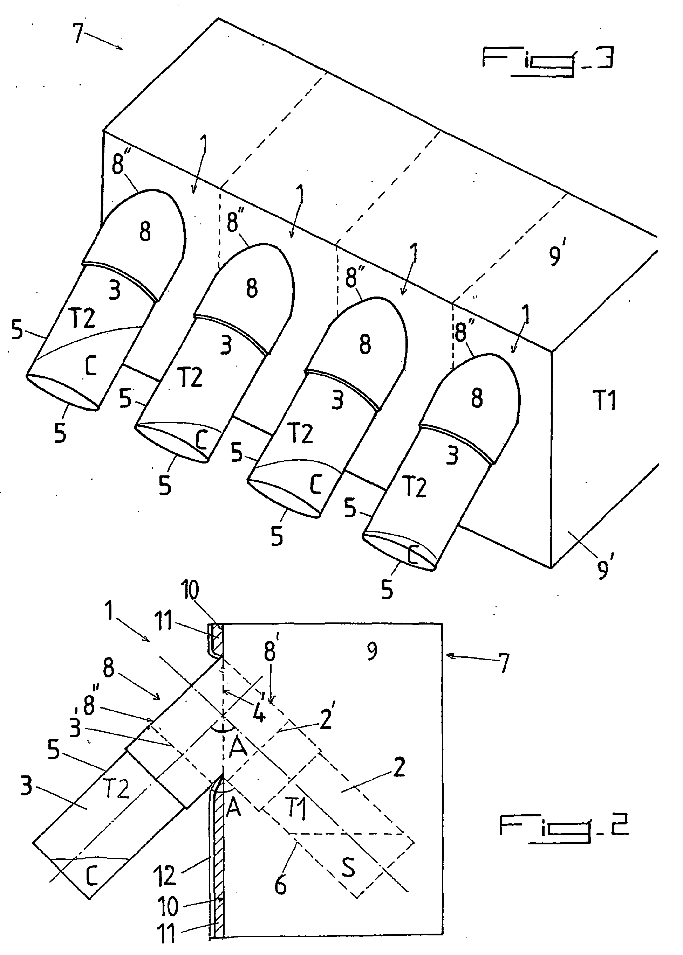

Dans un second mode de réalisation représenté sur la figure 2, le dispositif 1 selon la présente invention est caractérisé en ce que les récipients d'évaporation 2 et de condensation 3 sont reliés, au niveau de leurs ouvertures 2', 3', par l'intermédiaire d'une pièce coudée 8 à arrêtes droites dans laquelle se trouve le plan commun de séparation 4'.

Contrairement au premier mode de réalisation décrit ci-dessus dans lequel les récipients d'évaporation 2 et de condensation 3 étaient directement reliés entre eux, par exemple par vissage, collage, soudage ou analogue, les récipients d'évaporation 2 et de condensation 3 sont ici reliés par l'intermédiaire d'une pièce coudée 8.

Cette mesure permet notamment de monter et démonter plus facilement le dispositif 1 par exemple pour alimenter, vider, changer, réparer ou nettoyer les récipients d'évaporation 2 et de condensation 3 précités.

Selon une autre caractéristique avantageuse, la surface de la section du récipient d'évaporation 2 située à proximité du plan commun de séparation 4, 4' est inférieure ou égale à la surface dudit plan commun de séparation 4, 4'. Cette optimisation de la surface du plan commun de séparation 4, 4' permet d'accroître la rapidité d'exécution de l'opération de concentration et donc d'accroître la rentabilité économique du dispositif 1.

Comme précédemment évoqué, un mode de réalisation particulièrement préféré de la présente invention est caractérisé en ce que les récipients d'évaporation 2 et de condensation 3 sont fixés de façon amovible sur la pièce coudée 8, par exemple en prévoyant des pas de vis sur les parois 6, 5 desdits récipients 2, 3 et de ladite pièce coudée 8. Bien entendu, tous les autres modes habituels de fixation temporaire peuvent également être envisagés (liaison par encliquetage, par crochets, attaches, écrous...) et les différentes fixations peuvent être munies, si nécessaire, de moyens d'étanchéité adéquats, tels que des joints, membranes ou analogues...

Selon une autre caractéristique de la présente invention, le dispositif 1 est caractérisé en ce que les récipients d'évaporation 2 et de condensation 3 sont identiques. Ceci permet avantageusement d'intervertir si nécessaire ou si cela est souhaité, les récipients d'évaporation 2 et de condensation 3. Cette caractéristique permet également de réduire les quantités de récipients d'évaporation 2 et de condensation 3 stockés en réserve.

De manière particulièrement avantageuse le dispositif selon l'invention est caractérisé en ce que l'angle A existant entre les bras du « V » renversé formé par les axes longitudinaux des récipients d'évaporation 2 et de condensation 3 est compris entre 30° et 150°, et de préférence égal à environ 90°, ce qui permet pour un encombrement raisonnable d'obtenir des vitesses d'écoulement suffisantes des condensats C le long des parois 5 du récipient de condensation 3.

Selon une autre caractéristique, le récipient d'évaporation 2 et/ou le récipient de condensation 3 sont réalisés sous la forme de tubes cylindriques.

On peut ainsi utiliser un matériel standard ou suffisamment proche du matériel standard de laboratoire pour manipuler la solution S ou le condensat C avant ou après l'utilisation du dispositif 1 conforme à la présente invention.

Comme expliqué plus haut, le ou les tubes cylindriques peuvent être pourvus d'un moyen de vissage dudit ou desdits tubes dans la pièce coudée 8.

Comme représenté à titre d'exemples non limitatifs dans les figures 1 à 3, le dispositif 1 est encore avantageusement caractérisé en ce que le récipient d'évaporation 2 est entièrement contenu dans une enceinte thermique 9, 9' de température réglable, le plan commun de séparation 4, 4' des récipients d'évaporation 2 et de condensation 3 étant situé au niveau et dans le plan de l'une des parois 10 de ladite enceinte thermique 9, 9'.

Ainsi, le plan commun de séparation 4, 4' qui est commun aux récipients d'évaporation 2 et de condensation 3 et qui délimite la surface à partir de laquelle le liquide évaporé peut se condenser, peut être, comme on le voit clairement sur les figures 1 à 3, situé dans le plan vertical de l'une des parois verticales de l'enceinte thermique 9, 9', la partie la plus froide (récipient de condensation 3 et partie non chauffée 8" de la pièce coudée 8) étant située à l'extérieur de ladite enceinte thermique 9, 9'.

Comme représenté à la figure 2, une variante particulièrement avantageuse du dispositif 1 est caractérisée en ce que l'enceinte thermique 9 est calorifugée sur au moins sa partie de paroi 10 située à proximité du récipient de condensation 3 au moyen d'au moins une couche 11 de matériau thermiquement isolant et/ou chimiquement inerte.

Si ladite au moins une couche 11 de matière isolante n'est pas suffisamment résistante aux agressions chimiques, elle peut avantageusement être à son tour recouverte d'une couche supplémentaire de protection 12 de ladite couche 11 réalisée en un matériau chimiquement plus adapté, par exemple en un polymère fluoré du type PTFE.

De cette manière, on évite d'endommager la couche 11 en matière isolante lors d'une éventuelle fuite de vapeur ou de liquide agressif. En outre, cette couche supplémentaire de protection 12 prévient les risques de brûlures chez l'utilisateur.

Grâce à cette isolation, le récipient d'évaporation 2 (et éventuellement la partie chauffée 8') sont mieux maintenus à la température T₁. De même, la différence entre la température T₁ du récipient d'évaporation 2 et la température T₂ maximale du récipient de condensation 3 peut mieux être maintenue élevée, ce qui contribue à améliorer encore le rendement du dispositif 1.

L'utilisation de l'atmosphère ambiante comme moyen de refroidissement du récipient de condensation 3 est particulièrement avantageuse, à la fois sur le plan économique que sur celui de la commodité et de la sécurité d'emploi par rapport à un éventuel dispositif de refroidissement additionnel. L'ajout d'un moyen de refroidissement supplémentaire, par exemple un refroidisseur à eau ou à liquide de refroidissement chimique reste toutefois possible, en particulier si l'on veut encore améliorer les performances dudit dispositif 1.

En ce qui concerne le matériau constitutif du récipient d'évaporation 2 et de la partie chauffée 8' de la pièce coudée 8, on choisira un matériau résistant aux substances chimiques corrosives employées dans le cadre de la solubilisation des échantillons à analyser (H₂SO₄, HNO₃, HF, HCl, H₃PO₄, NaOH, KOH...), et de préférence un matériau à forte conductivité thermique.

Le récipient de condensation 3 et la partie non chauffée 8" de la pièce coudée 8 seront avantageusement réalisés en un matériau résistant également aux substances corrosives précitées.

Des matériaux adaptés pour réaliser la partie non chauffée 8" de la pièce coudée 8 sont, par exemple, le quartz, les polymères fluorés...

Bien entendu, la pièce coudée 8 peut également être réalisée d'une seule pièce en une seule matière chimiquement résistante et inerte, par exemple en un polymère fluoré du type PTFE.

La figure 3 représente une vue en perspective d'un dispositif évaporateur et condenseur comportant plusieurs dispositifs 1 (dont on a représenté que les parties visibles pour plus de clarté) selon la présente invention. Les quatre dispositifs 1 sont arrangés sous la forme de modules dans une enceinte thermique unique 9'. L'intérieur d'une telle enceinte thermique unique 9' peut par exemple être garni ou réalisé à partir d'un bloc massif d'un matériau conduisant bien la chaleur parcouru par des résistances électriques et enveloppant complètement toutes ou sensiblement toutes les parois 6 du récipient d'évaporation 2 (éventuellement les parties chauffées 8' de la pièce coudée 8) afin d'obtenir une température T₁ homogène sur lesdites parois 6 et parties 8' et à l'intérieur dudit récipient d'évaporation 2. Le graphite est, par exemple, particulièrement adapté pour réaliser un bloc massif chauffant pour une enceinte thermique unique 9'.

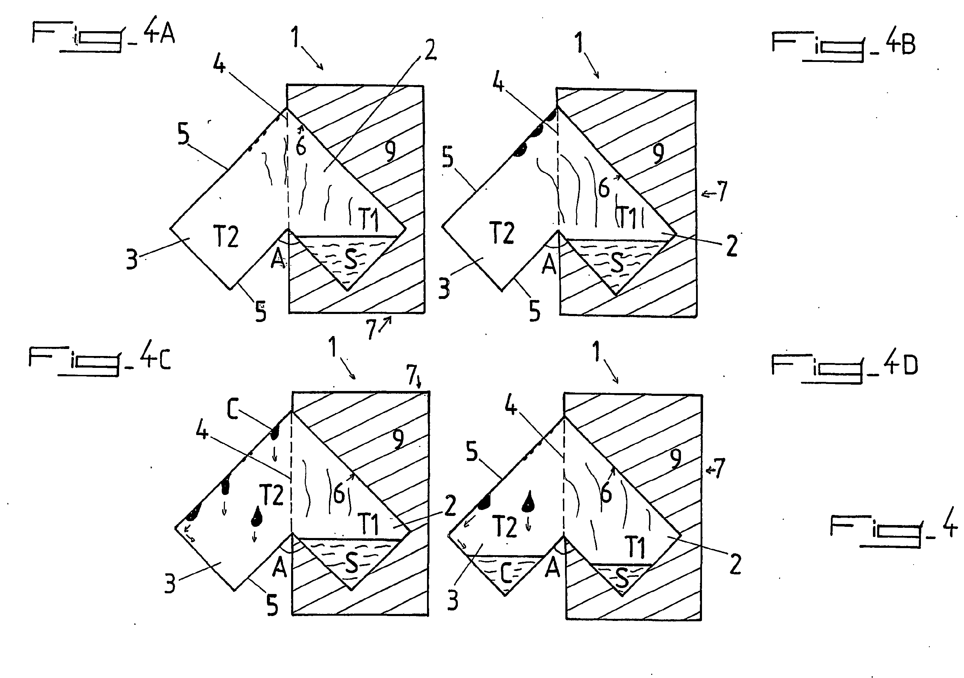

Comme on peut le voir sur les figures 4a à 4d, le dispositif 1 selon la présente invention fonctionne schématiquement de la manière détaillée ci-après.

La solution à évaporer S est introduite dans le récipient d'évaporation 2 du dispositif 1 par l'intermédiaire d'un moyen d'alimentation quelconque (non représenté) tel qu'une ouverture refermable, un raccord à un réservoir externe...

Dans le cas où le récipient d'évaporation 2 est amovible, le liquide à évaporer pourra simplement être versé manuellement dans ledit récipient avant d'être mis ou remis en place sur le dispositif 1, en particulier fixé sur la pièce coudée 8. Des récipients d'évaporation 2 et de condensation 3 amovibles sont particulièrement utiles lorsque la nature de la solution à évaporer est amenée à changer souvent ou lorsqu'un nettoyage est nécessaire. Des récipients 2, 3 amovibles permettent également un remplacement plus facile et plus rapide, par exemple en cas de détérioration de l'un desdits récipients ou pour adapter le volume ou les propriétés physico-chimiques desdits récipients à la quantité ou la nature de la solution S à évaporer.

Lorsque la solution S est en place dans le récipient d'évaporation 2, la pièce coudée 8 munie du récipient de condensation 3 peut être fixée sur ledit récipient d'évaporation 2, par exemple par vissage ou clipsage en veillant à une bonne étanchéité entre les différents éléments raccordés.

La paroi 6 externe du récipient d'évaporation 2, le cas échéant la paroi de la partie chauffée 8' de la pièce coudée 8, sont ensuite mis en contact sur toute ou sensiblement toute leur surface avec le moyen de chauffage 7.

Dans les modes de réalisation non limitatifs illustrés sur les figures 1 à 4, le récipient d'évaporation 2 est introduit dans une enceinte thermique 9, 9' dont la forme intérieure épouse parfaitement ledit récipient d'évaporation 2, assurant ainsi un contact thermique intime. Comme on peut le voir de manière très claire sur la figure 2, le récipient de condensation 3 et la paroi de la partie non chauffée 8" de la pièce coudée 8 ne sont pas chauffés par le moyen de chauffage 7 et se trouvent donc à des températures inférieures à celle T₁ régnant dans ledit récipient d'évaporation 2 lorsque ledit moyen de chauffage 7 est mis en marche.

Il est à noter que contrairement au récipient d'évaporation 2, le récipient de condensation 3 ne se trouve pas à une température unique mais qu'il s'établit un gradient thermique à l'intérieur dudit récipient de condensation 3, dont la température maximale T₂ est inférieure à T₁ pour que la condensation puisque avoir lieu.

La température T₁ est réglée et régulée par l'intermédiaire du moyen de chauffage 7 de manière à ce que les constituants à extraire de la solution S s'évaporent, sans toutefois provoquer d'ébullition nuisible au sein de ladite solution S. Une plage de températures adéquate peut, par exemple, être comprise entre 40°C et 300°C selon les solutions S à traiter.

Comme on peut le voir sur les figures 4a à 4d, le chauffage modéré (frémissement) de la solution S entraîne l'apparition de gouttes de condensats C sur les parois plus froides du récipient de condensation 3. Comme illustré, ces gouttes naissent uniquement du côté gauche aux environs du sommet du « V » renversé supérieur et glissent le long de la paroi du récipient de condensation 3 (plus ou moins rapidement selon l'inclinaison due à l'angle A et la constitution interne de la paroi 5 du récipient de condensation 3) pour s'accumuler sous la forme d'un condensat C au fond du récipient de condensation 3.

Comme montré sur les figures 4c et 4d, la géométrie particulière en forme de « V » renversé à angle vif du dispositif 1 permet d'éviter que des gouttes de condensat C formées au sommet du « V » renversé supérieur ne retombent sous l'effet de leur propre poids dans la solution S à évaporer. En effet, l'angle vif précité permet de séparer et de maintenir de part et d'autre du plan commun de séparation 4, 4', les gouttes condensées destinées à être recueillies au fond du récipient de condensation 3 et les vapeurs non condensées du récipient d'évaporation 2. La pointe du « V » renversé supérieur forme par conséquent une sorte de rainure supérieure jouant le rôle de frontière linéaire unidimensionnelle sur laquelle aucune goutte (tridimensionnelle) ne peut se former.

De même, l'angle vif du « V » renversé inférieur, proche des fonds des récipients d'évaporation 2 et de condensation 3, forme une arrête vive inférieure jouant le rôle de seconde frontière unidimensionnelle pour les gouttes condensées qui se sont formées sur la partie gauche de la rainure supérieure formée par le « V » renversé supérieur, puisque celles-ci ne peuvent tomber que du bon côté du plan commun de séparation 4, 4', c'est-à-dire dans le fond du récipient de condensation 3. Le processus d'évaporation est donc grandement accéléré.

Enfin, le dispositif 1 selon la présente invention permet également une plus grande flexibilité dans la mesure où l'évaporation peut se faire sur de grands volumes de solution S.

Le dispositif 1 de la présente invention fournit donc un évaporateur-condenseur à la fois simple et performant et qui est facile et sûr à utiliser et à entretenir.

Il va de soi que le dispositif 1 conforme à la présente invention est préférentiellement réalisé en des matériaux répondant aux exigences précitées en matière de résistance chimique aux agressions provoquées par les réactifs ou solvants chimiques qui peuvent subsister dans la solution S à évaporer et de préférence, aux exigences habituelles en matière de conduction thermique.

De tels matériaux peuvent être choisis dans une gamme variée telle que, à titre indicatif, différents types de verres, de matières plastiques (en particulier les polymères fluorés tels que le PTFE), de métaux ou d'alliages spéciaux...

Selon une autre caractéristique particulièrement utile, le matériau utilisé pour la fabrication du ou des récipients d'évaporation 2 et/ou de condensation 3 est un matériau transparent ou translucide permettant un contrôle visuel des niveaux dans lesdits récipients 2, 3.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'évaporation et de condensation en milieu fermé constitué essentiellement d'un récipient d'évaporation, d'un moyen de chauffage dudit récipient d'évaporation et d'un récipient de condensation relié de façon sensiblement étanche audit récipient d'évaporation, **caractérisé en ce que** lesdits récipients d'évaporation (2) et de condensation (3) sont reliés entre eux, au niveau de leurs ouvertures (2', 3'), en s'étendant de part et d'autre d'un plan commun de séparation (4, 4') de manière à ce que la disposition desdits récipients (2, 3) forme sensiblement un « V » renversé à sommet vif et **en ce que** sensiblement toute la surface de la paroi (6) formant le récipient d'évaporation (2) est portée, par ledit moyen de chauffage (7), à une même température T₁ supérieure à la température T₂ la plus élevée de la paroi (5) formant le récipient de condensation (3).

2. Dispositif selon la revendication 1, **caractérisé en ce que** les récipients d'évaporation (2) et de condensation (3) sont reliés, au niveau de leurs ouvertures (2', 3'), par l'intermédiaire d'une pièce coudée (8) à arrêtes droites dans laquelle se trouve le plan commun de séparation (4').

3. Dispositif selon la revendication 1 ou 2, **caractérisé en ce que** la surface de la section du récipient d'évaporation (2) située à proximité du plan commun de séparation (4, 4') est inférieure ou égale à la surface dudit plan commun de séparation (4, 4').

4. Dispositif selon l'une quelconque des revendications 2 ou 3, **caractérisé en ce que** les récipients d'évaporation (2) et de condensation (3) sont fixés de façon amovible sur la pièce coudée (8).

5. Dispositif selon la revendication 4, **caractérisé en ce que** les récipients d'évaporation (2) et de condensation (3) sont identiques.

6. Dispositif selon l'une quelconque des revendications 1 à 5, **caractérisé en ce que** l'angle A existant entre les bras du « V » renversé formé par les axes longitudinaux des récipients d'évaporation (2) et de condensation (3) est compris entre 30° et 150°, et de préférence égal à environ 90°.

7. Dispositif selon l'une quelconque des revendications 1 à 6, **caractérisé en ce que** le récipient d'évaporation (2) et/ou le récipient de condensation (3) sont réalisés sous la forme de tubes cylindriques.

8. Dispositif selon l'une quelconque des revendications 2 à 7, **caractérisé en ce que** le ou les tubes cylindriques sont pourvus d'un moyen de vissage dudit ou desdits tubes dans la pièce coudée (8).

9. Dispositif selon l'une quelconque des revendications 1 à 8, **caractérisé en ce que** le récipient d'évaporation (2) est entièrement contenu dans une enceinte thermique (9, 9') de température réglable, le plan commun de séparation (4, 4') des récipients d'évaporation (2) et de condensation (3) étant situé au niveau et dans le plan de l'une des parois (10) de ladite enceinte thermique (9, 9').

10. Dispositif selon la revendication 9, **caractérisé en ce que** l'enceinte thermique (9, 9') est calorifugée sur au moins sa partie de paroi (10) située à proximité du récipient de condensation (3) au moyen d'au moins une couche (11) de matériau thermiquement isolant et/ou chimiquement inerte.

11. Dispositif selon l'une quelconque des revendications 1 à 10, **caractérisé en ce que** le matériau utilisé pour la fabrication du ou des récipients d'évaporation (2) et/ou de condensation (3) est un matériau transparent ou translucide permettant un contrôle visuel des niveaux dans lesdits récipients (2, 3).

## Claims

1. A device for evaporation and condensation in a confined or closed environment essentially comprising an evaporation container, a means for heating said evaporation container and a condensation container connected in a substantially sealed manner to said evaporation container, **characterised in that** said evaporation container (2) and condensation container (3) are interconnected at the level of their openings (2', 3'), extending on either side of a common separation plane (4, 4'), such that the arrangement of said containers (2, 3) substantially forms an inverted "V" with a sharp vertex, and **in that** virtually all of the surface of the wall (6) forming the evaporation container (2) is brought, by said heating means (7), to a temperature T₁ greater than the highest temperature T₂ of the wall (5) forming the condensation container (3).

2. The device according to claim 1, **characterised in that** the evaporation container (2) and condensation container (3) are interconnected at the level of their openings (2', 3') by means of an angled part (8) with straight shoulders in which the common separation plane (4') is located.

3. The device according to claim 1 or 2, **characterised in that** the surface of the section of the evaporation container (2) situated close to the common separation plane (4, 4') is lower than or equal to the surface of the said common separation plane (4, 4').

4. The device according to any one of claims 2 or 3, **characterised in that** the evaporation container (2) and condensation container (3) are fixed in a removable manner to the angled part (8).

5. The device according to claim 4, **characterised in that** the evaporation container (2) and condensation container (3) are identical.

6. The device according to any one of claims 1 to 5, **characterised in that** the angle A between the arms of the reversed "V", formed by the longitudinal axes of the evaporation container (2) and condensation container (3), is between 30° and 150°, preferably about 90°.

7. The device according to any one of claims 1 to 6, **characterised in that** the evaporation container (2) and/or the condensation container (3) are in the form of cylindrical tubes.

8. The device according to any one of claims 2 to 7, **characterised in that** the cylindrical tube or tubes are provided with means for screwing said tube or tubes into the angled part (8).

9. The device according to any one of claims 1 to 8, **characterised in that** the evaporation container (2) is contained entirely in a thermal enclosure (9, 9') with a controllable temperature, the common separation plane (4, 4') of the evaporation container (2) and condensation container (3) being flush with and in the plane of one of the walls (10) of said thermal enclosure (9, 9').

10. The device according to claim 9, **characterised in that** the thermal enclosure (9, 9') is heat-insulated on at least part of the wall (10) situated close to the condensation container (3) by means of at least one layer (11) of thermally insulating material and/or chemically inert material.

11. The device according to any one of claims 1 to 10, **characterised in that** the material used for producing the evaporation container (2) and/or condensation container (3) is a transparent or translucent material permitting visual control of the levels in said containers (2, 3).

## Patentansprüche

1. Vorrichtung zum Verdampfen und zum Kondensieren in einer geschlossenen Umgebung, die in der Hauptsache einen Behälter zum Verdampfen, ein Mittel zum Erwärmen des Behälters zum Verdampfen und einen Behälter zum Kondensieren aufweist, der auf im Wesentlichen dichte Weise mit dem Behälter zum Verdampfen verbunden ist, **dadurch gekennzeichnet, dass** die Behälter zum Verdampfen (2) und zum Kondensieren (3) untereinander in Höhe ihrer Öffnungen (2', 3') verbunden sind, indem sie sich auf beiden Seiten einer gemeinsamen Trennungsebene (4, 4') derart erstrecken, dass die Anordnung der Behälter (2, 3) im Wesentlichen ein umgedrehtes "V" mit einer scharfen Spitze bildet, und **dadurch**, dass im Wesentlichen die gesamte Oberfläche der Wand (6), die den Behälter zum Verdampfen (2) bildet, von dem Mittel zum Erwärmen (7) auf eine gleiche Temperatur T₁ gebracht wird, die größer ist als die höchste Temperatur T₂ der Wand (5), die den Behälter zum Kondensieren (3) bildet.

2. Vorrichtung nach Anspruch 1, **dadurch gekennzeichnet, dass** die Behälter zum Verdampfen (2) und zum Kondensieren (3) in Höhe ihrer Öffnungen (2', 3') mittels eines Kniestücks (8) mit geraden Kanten verbunden sind, in dem sich die gemeinsame Trennungsebene (4') befindet.

3. Vorrichtung nach Anspruch 1 oder 2, **dadurch gekennzeichnet, dass** die Oberfläche des Abschnitts des Behälters zum Verdampfen (2), die in der Nähe der gemeinsamen Trennungsebene (4, 4') liegt, kleiner oder gleich der Oberfläche der gemeinsamen Trennungsebene (4, 4') ist.

4. Vorrichtung nach einem der Ansprüche 2 oder 3, **dadurch gekennzeichnet, dass** die Behälter zum Verdampfen (2) und zum Kondensieren (3) abnehmbar auf dem Kniestück (8) befestigt sind.

5. Vorrichtung nach Anspruch 4, **dadurch gekennzeichnet, dass** die Behälter zum Verdampfen (2) und zum Kondensieren (3) identisch sind.

6. Vorrichtung nach einem der Ansprüche 1 bis 5, **dadurch gekennzeichnet, dass** der Winkel A, der zwischen den Armen des umgedrehten V, das von den Längsachsen der Behälter zum Verdampfen (2) und zum Kondensieren (3) gebildet wird, vorhanden ist, im Bereich zwischen 30 ° und 150 °, und bevorzugt etwa gleich 90 ° liegt.

7. Vorrichtung nach einem der Ansprüche 1 bis 6, **dadurch gekennzeichnet, dass** der Behälter zum Verdampfen (2) und/oder der Behälter zum Kondensieren (3) in Form von zylinderförmigen Rohren ausgeführt ist.

8. Vorrichtung nach einem der Ansprüche 2 bis 7, **dadurch gekennzeichnet, dass** das oder die zylinderförmigen Rohr(e) mit einem Mittel zum Verschrauben des Rohrs oder der Rohre in das Kniestück (8) ausgestattet sind.

9. Vorrichtung nach einem der Ansprüche 1 bis 8, **dadurch gekennzeichnet, dass** der Behälter zum Verdampfen (2) vollständig in einem thermischen Gehäuse (9, 9') mit einstellbarer Temperatur enthalten ist, wobei die gemeinsame Trennungsebene (4, 4') der Behälter zum Verdampfen (2) und zum Kondensieren (3) in Höhe oder im Bereich und in der Ebene einer der Wände (10) des thermischen Gehäuses (9, 9') liegt.

10. Vorrichtung nach Anspruch 9, **dadurch gekennzeichnet, dass** das thermische Gehäuse (9, 9') auf mindestens seinem Teil der Wand (10), der in der Nähe des Behälters zum Kondensieren (3) liegt, durch mindestens eine Schicht (11) aus einem thermisch isolierenden und/oder chemisch inerten Material wärmeisoliert ist.

11. Vorrichtung nach einem der Ansprüche 1 bis 10, **dadurch gekennzeichnet, dass** das Material, das für die Fertigung des oder der Behälter zum Verdampfen (2) und/oder zum Kondensieren (3) verwendet wird, ein transparentes oder durchscheinendes (lichtdurchlässiges) Material ist, das eine Sichtkontrolle der Füllhöhen in den Behältern (2, 3) ermöglicht.
